(19) Europäisches Patentamt
European Patent Office
Office européen des brevets

(11) **EP 2 766 251 B1**

(12) **FASCICULE DE BREVET EUROPEEN**

(45) Date de publication et mention de la délivrance du brevet:
**28.12.2016 Bulletin 2016/52**

(21) Numéro de dépôt: **12775799.5**

(22) Date de dépôt: **01.10.2012**

(51) Int Cl.:
**B62D 57/032** *(2006.01)* **G05B 19/19** *(2006.01)*

(86) Numéro de dépôt international:
**PCT/FR2012/052216**

(87) Numéro de publication internationale:
**WO 2013/054019 (18.04.2013 Gazette 2013/16)**

(54) **PROCÉDÉ DE CONTRÔLE D'UN ROBOT POSSÉDANT AU MOINS DEUX JAMBES**

VERFAHREN ZUR STEUERUNG EINES ROBOTERS MIT MINDESTENS ZWEI BEINEN

METHODE FOR CONTROLLING A ROBOT WITH AT LEAST TWO LEGS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2011 FR 1159152**

(43) Date de publication de la demande:
**20.08.2014 Bulletin 2014/34**

(73) Titulaire: **Commissariat à l'Énergie Atomique et aux Énergies Alternatives 75015 Paris (FR)**

(72) Inventeur: **MICAELLI, Alain F-92260 Fontenay-aux-Roses (FR)**

(74) Mandataire: **Delumeau, François Guy et al Cabinet Beau de Loménie 158, rue de l'Université 75340 Paris Cedex 07 (FR)**

(56) Documents cités:
**US-A1- 2011 029 130**

- **IGOR MORDATCH ET AL: "Robust physics-based locomotion using low-dimensional planning", ACM TRANSACTIONS ON GRAPHICS, vol. 29, no. 4, 26 juillet 2010 (2010-07-26), page 1, XP055035036, ISSN: 0730-0301, DOI: 10.1145/1778765.1778808 cité dans la demande**
- **THIJS MANDERSLOOT ET AL: "Controlling Velocity In Bipedal Walking: A Dynamic Programming Approach", HUMANOID ROBOTS, 2006 6TH IEEE-RAS INTERNATIONAL CONFERENCE ON, IEEE, PI, 1 décembre 2006 (2006-12-01), pages 124-130, XP031053008, ISBN: 978-1-4244-0199-4**

**Description**

Domaine technique et art antérieur

L'invention s'inscrit dans le domaine de la robotique, et plus précisément dans le domaine des méthodes de commande de robots possédant un corps supporté par au moins deux jambes sur lesquels ils s'appuient et progressent.
Différentes méthodes mathématiques de contrôle de la marche de tels robots ont été décrites, mais elles restent imparfaites à bien des égards au vu des nombreuses difficultés qu'un robot bipède doit surmonter pour se déplacer de manière efficace même dans un environnement simple (sol plat sans obstacle, par exemple), et *a fortiori* dans un environnement complexe, comprenant des escaliers par exemple.
Suivant certaines approches de commande, on a fixé, d'une manière ou d'une autre, la période des pas. C'est le cas par exemple dans la divulgation du document « Online walking motion generation with automatic foot step placement », Herdt et al., Advanced robotics, 24, 719, 2010, qui présente une utilisation de la commande prédictive pour générer une marche pour un robot bipède sur la base d'une vitesse de référence prédéfinie, d'une adaptation libre de l'emplacement du pied et de contraintes relatives au centre de pression du pied du robot au sol.
Dans ce document, le modèle de robot utilisé est simple, mais toujours pour commander le robot sur la base d'une période de pas fixée, certains auteurs ont développés des modèles plus compliqués, incluant par exemple des mouvements de hanches pour rendre compte d'une dynamique complexe s'approchant de celle d'un être humain.
Notamment, le document US 2008/0133053 aborde le problème de la stabilité d'un robot subissant une poussée. Le robot est modélisé par un pendule inversé incluant une roue libre pour reproduire les effets de modification de moments angulaires du corps. Les auteurs divulguent un procédé de contrôle fonctionnant par la détermination instantanée d'une position sur le sol pour un contact d'une jambe avec le sol, et d'un moment angulaire de la roue libre.
Selon d'autres approches, comme par exemple dans les articles Hyon et Fujimoto IFAC Symposium on robot control 2009 et van Oort et Stramigioli IEEE international conference on Robotics and Automotion 2007, p. 4653-4660, c'est la longueur du pas qui est fixée, la durée de celui-ci étant alors variable.
Mais il a également été proposé d'utiliser à la fois la durée du pas et la longueur de celui-ci comme variables de commande. Ainsi, le document « Robust physics-based locomotion using low-dimensionnal planning » Mordatch et al., ACM Transactions on graphics 2010, 29 (3) divulgue un contrôleur défini sur la base d'un modèle de pendule inversé, pour lequel les paramètres de contrôle incluent la durée du pas et la localisation du pas. Les équations de mouvement sont appliquées séquentiellement pour au moins deux pas, et sont polynomiales. La continuité des paramètres de contrôle est imposée entre deux pas consécutifs. Une optimisation sur l'ensemble d'au moins deux pas du robot est effectuée ensuite par une méthode statistique. Dans une situation sans phase de vol, la commande est calculée sur la base de deux pas, c'est-à-dire un enchainement formé d'un premier changement de pied, un déplacement, un deuxième changement de pied, un nouveau déplacement et enfin un troisième changement de pied.
Une telle méthode de commande, de fait qu'elle porte sur un ensemble d'au moins deux pas, présente l'inconvénient que le calcul peut être particulièrement long à mener, ce qui nécessite une plus grande puissance informatique et diminue également la réactivité du système.
L'invention vise à résoudre ces problèmes en particulier, tout en diminuant la quantité de calculs nécessaires.

Résumé de l'invention

L'invention consiste en un procédé de contrôle du mouvement sur un sol d'un dispositif disposant d'au moins deux jambes, comprenant

- une étape d'obtention de valeurs courantes de variables d'état cinématiques du dispositif,
- une étape d'optimisation, éventuellement sous des contraintes, d'une commande de déplacement pour le dispositif, en prenant en compte lesdites valeurs courantes et une consigne de variables de déplacement du dispositif, ladite optimisation étant effectuée en modélisant un déplacement du dispositif entre un état courant et un deuxième état, le dispositif s'appuyant, au cours dudit déplacement sur au moins une première jambe, puis à partir d'un instant de changement de centre de pression au sol, au moins sur une deuxième jambe,
- et une étape d'application de ladite commande de déplacement,

caractérisé en ce que, ladite optimisation est effectuée sous l'hypothèse que l'énergie potentielle de gravité du dispositif dans le deuxième état est, en fonction du temps, un maximum local.
Ainsi, la modélisation proposée dans l'invention est basée sur un état caractéristique du cycle de marche correspondant à un maximum d'énergie potentielle.
Cet état existe toujours pour des allures périodiques de marche, et n'est caractérisé que par une contrainte sur les variables d'état, comme cela sera détaillé plus loin.

Cet état est l'intersection de la trajectoire du système avec une section de Poincaré, c'est à dire un sous-espace de l'espace d'états, caractérisé par une contrainte sur les variables d'état.

Le procédé de contrôle permet de définir des paramètres de contrôle pour un robot bipède de manière précise et rapide, car un tel modèle de transition permet d'expliciter des équations de mouvement par un traitement analytique, notamment en utilisant à la fois le temps et la longueur de pas comme variables de commande.

Notamment, le procédé de contrôle proposé utilise au moins deux fois moins de variables de contrôle que celui de l'art antérieur tel que présenté dans l'article de Mordatch *et al.*

Les sections de Poincaré sont bien adaptées à l'étude de la stabilité des systèmes cycliques, et par conséquent, la modélisation du déplacement utilisée par l'invention se prête mieux à l'analyse de la commande que la modélisation considérée dans l'art antérieur, par exemple dans l'article de Mordatch *et al,* qui modélise le déplacement entre des états de changement de pied.

En cas de contraintes imposées sur la position des pieds, ce qui a pour conséquence de ne laisser que la durée du pas comme variable de commande, il est nécessaire de considérer deux pas, c'est-à-dire deux changements de jambe d'appui entre le premier et le deuxième états, mais là encore, la commande proposée dans l'invention se prête favorablement à une analyse et à une caractérisation.

Grâce à cette caractérisation, il est possible de mieux connaître la commande, et notamment de définir des garanties de convergence.

Il est également possible de choisir à l'avance des gains ou paramètres appropriés pour le contrôleur.

On précise que l'énergie potentielle de gravité du dispositif est adaptée dans le cadre d'un modèle du dispositif.

Dans un modèle du dispositif, appelé « pendule linéaire inversé », un centre de masse du dispositif fait l'objet d'un forçage vis-à-vis d'un plan au cours dudit déplacement. Dans un modèle alternatif de pendule inversé, non linéaire, qualifié de modèle en « compas », les longueurs entre un centre de masse du dispositif et les pieds du dispositif sont constantes.

Préférentiellement, la commande de déplacement comprend une position sur le sol pour un contact d'une jambe avec le sol ou un temps pour un contact d'une jambe avec le sol, ou les deux.

Selon un mode de réalisation intéressant, ladite optimisation est effectuée en utilisant un modèle de déplacement linéarisé sous l'hypothèse que le déplacement suit une trajectoire polynomiale, par exemple rectiligne ou circulaire. Les calculs sont alors considérablement simplifiés.

Dans un mode de réalisation, l'optimisation est effectuée à l'aide d'un régulateur quadratique linéaire, et alternativement, elle est effectuée par inversion de modèle.

D'autres caractéristiques de l'invention sont les suivantes : l'optimisation peut être effectuée en fonction d'une consigne déterminée en fonction d'une trajectoire poursuivie, et/ou en fonction d'une consigne déterminée en fonction d'une vitesse poursuivie.

L'optimisation peut être effectuée sous une contrainte de respect d'un cône de frottement lors d'un contact d'une jambe avec le sol.

L'optimisation peut être effectuée en fonction d'une consigne comprenant au moins une position du dispositif ou une vitesse du dispositif et/ou en fonction d'une consigne de longueur de pas moyenne, ou une période (durée) de pas moyenne.

Enfin, selon un modèle, l'énergie potentielle est fonction d'une distance entre le centre de masse et un point de contact avec le sol de la jambe en contact avec le sol.

L'invention consiste également en un robot humanoïde ou non humanoïde incorporant un dispositif de commande mettant en oeuvre un procédé de contrôle tel qu'évoqué ci-dessus.

Brève description des figures

Les figures 1 et 2 représentent les modèles de robot et de déplacement utilisés.

La figure 3 présente un organigramme général d'un procédé selon l'invention.

La figure 4 présente un premier mode de réalisation de l'invention.

Les figures 5 à 7 présentent des résultats relatifs à la simulation d'un premier déplacement d'un robot selon le premier mode de réalisation de l'invention.

La figure 8 présente un deuxième mode de réalisation de l'invention.

Les figures 9 à 11 présentent des résultats relatifs à la simulation du même premier déplacement d'un robot selon cette fois le deuxième mode de réalisation de l'invention.

Les figures 12 à 14 présentent des résultats relatifs à la simulation d'un deuxième déplacement d'un robot selon le deuxième mode de réalisation de l'invention.

La figure 15 présente une variante du deuxième mode de réalisation de l'invention.

Les figures 16 à 18 présentent des résultats relatifs à la simulation d'un troisième déplacement d'un robot selon le deuxième mode de réalisation de l'invention.

La figure 19 présente une autre variante du deuxième mode de réalisation de l'invention.

Les figures 20 à 22 présentent des résultats relatifs à la simulation d'un quatrième déplacement d'un robot selon le deuxième mode de réalisation de l'invention.

Exposé détaillé de l'invention

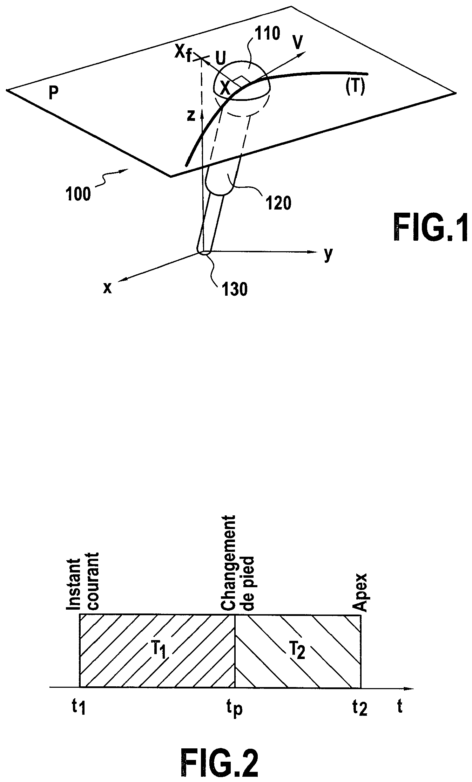

En figure 1, on a représenté, de manière schématique, le modèle physique de robot utilisé dans l'invention. Le robot 100 comprend un centre de masse 110, une jambe 120 et un pied 130. La jambe 120 relie le centre de masse 110 et le pied 130. Une deuxième jambe est également une composante du robot 100, mais elle n'est pas représentée sur la figure 1. En effet, pour le modèle mathématique modélisant le robot 100 qui va être développé ci-après, il suffit de considérer une seule jambe 120.

Le robot 100 est modélisé sous la forme d'un pendule linéaire inversé. Dans l'hypothèse où l'un des pieds du robot reste en permanence au contact du sol, le système trouve une expression mathématique simple sous la forme de l'équation

$$\ddot{\mathbf{X}} = \frac{\mathbf{g}}{\mathbf{z_c}}\left(\mathbf{X} - \mathbf{X}_f\right) \qquad\qquad \text{Equation 1}$$

avec les notations suivantes

- X la position du centre de masse 110 dans le plan horizontal,
- $X_f$ la position du pied 130 dans le même plan horizontal,
- $z_c$ hauteur du centre de masse 110 lorsque le centre de masse 110 est à la verticale du pied 130.

Dans le modèle utilisé, la trajectoire du centre de masse 110 est contrainte à rester dans un plan respectant la condition $z = z_c$ pour $X = X_f$. Ce plan est déterminé par les vecteurs vitesse et accélération du centre de masse en un instant initial. L'énergie potentielle du robot 100 prend alors la forme $\mathcal{V} = -\frac{1}{2}\omega\left\|\mathbf{X} - \mathbf{X}_f\right\|^2$, $\omega$ étant la pulsation caractéristique du système, dépendant de g et $z_c$. La longueur des jambes est variable. Cela est représenté sous forme d'une jambe 120 télescopique en figure 1. Alternativement, la longueur des jambes peut varier du fait de la présence d'un genou.

Dans une variante, le centre de masse est contraint à rester sur une surface respectant la condition $z = z_c$ pour $X = X_f$.

L'intégration de l'équation différentielle 1 donne le comportement en fonction du temps suivant :

$$\begin{cases} \mathbf{X} - \mathbf{X}_f & = (\mathbf{X_0} - \mathbf{X}_f)\cosh(\omega t) + \frac{\dot{\mathbf{X}}_0}{\omega}sinh(\omega t) \\ \frac{\dot{\mathbf{X}}}{\omega} & = (\mathbf{X_0} - \mathbf{X}_f)sinh(\omega t) + \frac{\dot{\mathbf{X}}_0}{\omega}cosh(\omega t) \end{cases} \qquad \text{Equations 2}$$

L'indice 0 indique une valeur initiale à l'instant 0. La variable t représente le temps.

Dans la suite de l'exposé, les coordonnées sont exprimées en fonction du changement de variable suivant, définissant de manière simple les variables d'état du système :

$$\begin{cases} \mathbf{U} & = \mathbf{X} - \mathbf{X}_f \\ \mathbf{V} & = \frac{\dot{\mathbf{X}}}{\omega} \end{cases} \qquad\qquad \text{Equations 3.}$$

Le vecteur U est un vecteur de dimension 2 défini par les positions du centre de masse 110 et du pied 130. Le vecteur V de dimension 2 est quant à lui représentatif de la vitesse du centre de masse dans le plan horizontal, celle-ci étant rapportée à la pulsation.

En référence à la figure 2, on a représenté le modèle de transition utilisé dans l'invention. La figure 2 représente l'évolution du système dans le temps. Trois instants sont représentés. Tout d'abord, l'instant $t_1$, qui correspond à l'instant courant. Ensuite, un instant tp est représenté. Il s'agit d'un instant de poser d'un pied sur le sol et simultanément de perte de contact de l'autre pied avec le sol (noté changement de pied, et qui, de manière générale est simplement un changement de centre de pression au sol). Enfin, un troisième instant $t_2$ postérieur aux instants $t_1$ et $t_p$ est représenté. Cet instant est un instant de maximum d'énergie potentielle du système 100 (appelé apex), où la dérivée de l'énergie potentielle v est nulle, ce qui impose l'égalité $U^t V = 0$.

La durée entre les instants $t_1$ et $t_p$ est noté $T_1$. La durée entre les instants $t_p$ et $t_2$ est notée $T_2$.

Le modèle de transition représenté par la figure 2 porte sur la transition d'un premier état du système 100 (instant $t_1$) à un deuxième état du système 100, dans lequel l'énergie potentielle est maximale (instant $t_2$), ces deux états étant séparés par un unique échange de pied au contact du sol (instant tp).

Si l'on note les états de début et de fin de la transition avec des variables d'état portant les indices 1 et 2, et si on note

- $\Delta X_f$ le vecteur entre les deux localisations de poser de pied successives,
- S et C les fonctions sinus et cosinus hyperboliques, respectivement,

le fait que les variables d'état à l'instant de changement de pied (ou changement de centre de pression au sol) sont égales impose les équations suivantes :

$$\begin{cases} \mathbf{X}_{f_0} + C_{T_1}\mathbf{U}_0 + S_{T_1}\mathbf{V}_0 & = & \mathbf{X}_i & = & \mathbf{X}_{f_1} + C_{T_2}\mathbf{U}_1 - S_{T_2}\mathbf{V}_1 \\ S_{T_1}\mathbf{U}_0 + C_{T_1}\mathbf{V}_0 & = & \dfrac{\dot{\mathbf{X}}_i}{\omega} & = & -S_{T_2}\mathbf{U}_1 + C_{T_2}\mathbf{V}_1 \end{cases} \qquad \text{Equations 4}$$

Ces équations permettent d'obtenir le modèle suivant représentant la transition entre les deux états

$$\begin{cases} \mathbf{U}_1 & = & C_{T_1+T_2}\mathbf{U}_0 + S_{T_1+T_2}\mathbf{V}_0 - C_{T_2}\Delta\mathbf{X}_f \\ \mathbf{V}_1 & = & S_{T_1+T_2}\mathbf{U}_0 + C_{T_1+T_2}\mathbf{V}_0 - S_{T_2}\Delta\mathbf{X}_f \end{cases} \qquad \text{Equations 5}$$

Si comme indiqué précédemment, l'instant $t_2$ est un instant de maximum d'énergie potentielle, et est donc caractérisé par la condition $U^t V = 0$, alors si on utilise T1 et $\Delta X_f$ comme variables de commande, l'espace de commande est de dimension 3 et le système est commandable.

La figure 1 représente le système 100 à l'instant $t_2$, c'est-à-dire dans un état de maximum d'énergie potentielle, alors que le système 100 se déplace le long de la trajectoire T dans le plan P.

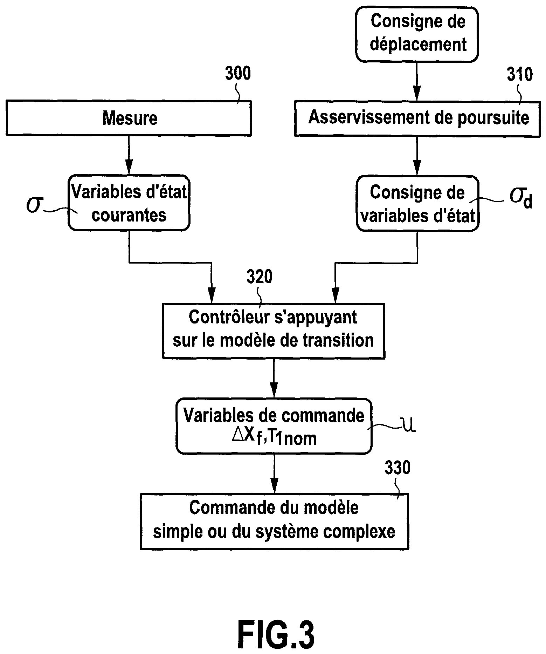

En référence à la figure 3, on a représenté le procédé de contrôle selon l'invention. Ce procédé comprend tout d'abord une étape 300 de mesure des valeurs courantes σ de variables d'état. Cela peut se faire, selon différents modes de réalisation, à l'aide de différents capteurs. Le robot décide aussi dans quel plan P il souhaite faire évoluer son centre de masse 110, en fonction des valeurs courantes σ.

Par ailleurs, on fixe une consigne de déplacement pour le système, et celle-ci est au cours d'une étape 310 de traitement de la consigne par un asservissement de poursuite transformée en une consigne de variables d'état $\sigma_d$.

La consigne de variables d'état σ est traitée par un contrôleur s'appuyant sur le modèle de transition présenté en figure 2, au cours d'une étape 320. Le contrôleur 320 produit des variables de commande $\mathcal{V}$ qui sont utilisées au cours d'une étape 330 pour commander le robot 100 lui-même comme modèle simple ou comme consignes pour un modèle complexe du système.

Une fois la commande appliquée, le processus est recommencé aux étapes 300 et 310.

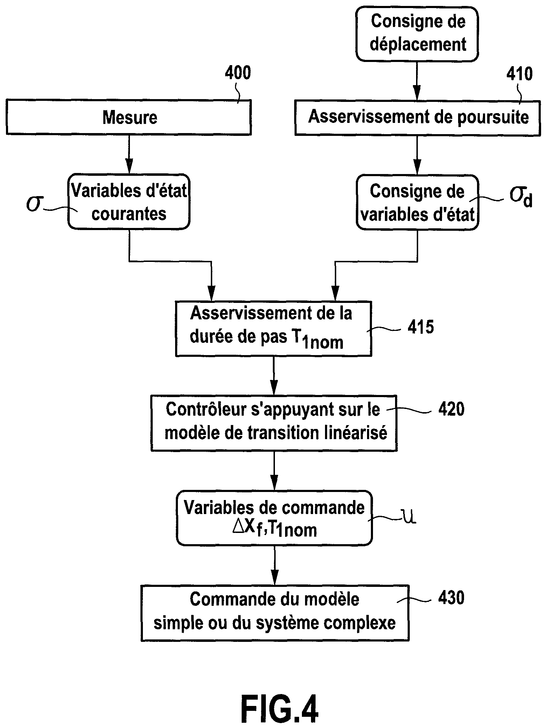

En référence à la figure 4, on a représenté un premier mode de réalisation détaillé de l'invention. On a, au préalable, défini une trajectoire à suivre, sous la forme d'une consigne de déplacement.

Le procédé comprend tout d'abord une étape 400 de mesure des valeurs courantes σ de variables d'état.

Une étape de projection 410 utilisant la consigne de déplacement permet par ailleurs la définition d'un vecteur vitesse V (consigne de variable d'état $\sigma_d$).

La projection de l'étape 410 consiste à définir le vecteur de vitesse (consigne de variable d'état σ) en fonction de l'écart entre la position courante du robot 100 et une position considérée comme correspondant à cette position courante sur la trajectoire. La position du robot 100 est prise comme étant la moyenne des positions du centre de masse du robot 100 en deux états d'énergie potentielle maximum successifs. La position selon la trajectoire correspondant à la position du robot 100 est prise comme étant une projection orthogonale de la position du robot 100 sur la trajectoire.

En particulier quand la trajectoire est une droite, la projection est une projection orthogonale sur la droite.

Quand la trajectoire est un cercle, la projection sur le cercle est effectuée suivant un rayon du cercle.

Le vecteur vitesse V et les valeurs courantes $\sigma$ servent ensuite lors d'une étape 420 d'asservissement par un contrôleur s'appuyant sur un modèle de transition linéarisé, dérivant du modèle présenté ci-dessus aux équations 5.

Une fois la commande appliquée au cours d'une étape 430, le processus est recommencé aux étapes 400 et 410.

L'étape d'asservissement 420 effectuée par un contrôleur s'appuyant sur le modèle de transition linéarisé est effectuée en faisant des hypothèses de linéarisation selon lesquelles, selon un mode de réalisation, le déplacement du robot 100 est quasi-rectiligne, et que son allure est symétrique.

Sous ces hypothèses, une solution du système d'équations 5 est donnée par

$$\begin{cases} \mathbf{U}_1 &= -\mathbf{U}_0 \\ \mathbf{V}_1 &= \mathbf{V}_0 \\ T_2 &= T_1 \end{cases} \qquad \text{Equations 6}$$

Le système d'équations 5 s'écrit alors, en fonction de la commande nominale $\Delta X_f$, sous la forme

$$\Delta \mathbf{X}_{f_{nom}} = 2\left(C_{T_1}\mathbf{U}_0 + S_{T_1}\mathbf{V}_0\right) \qquad \text{Equation 7}$$

En introduisant la petite variation de la commande $X_f$, notée $\delta X_f$, le système d'équations 5 s'écrit

$$\begin{cases} \mathbf{U}_1 &= -C_{T_1-T_2}\mathbf{U}_0 - S_{T_1-T_2}\mathbf{V}_0 - C_{T_2}\delta\Delta\mathbf{X}_f \\ \mathbf{V}_1 &= S_{T_1-T_2}\mathbf{U}_0 + C_{T_1-T_2}\mathbf{V}_0 - S_{T_2}\delta\Delta\mathbf{X}_f \end{cases} \qquad \text{Equations 8.}$$

La condition $U^tV=0$ appliquée à l'instant $t_2$ donne l'expression suivante

$$\delta T_2 = \delta T_1 - \frac{1}{\omega}\frac{(S_T\mathbf{U}_0 - C_T\mathbf{V}_0)^t}{\alpha_0^2 + \beta_0^2}\delta\Delta\mathbf{X}_f \qquad \text{Equation 9.}$$

Ce traitement mathématique permet d'exprimer le modèle de transition des équations 5 sous une forme linéarisée comme indiqué ci-après

$$\begin{cases} \delta\mathbf{U}_1 &= -\delta\mathbf{U}_0 - \mathbf{V}_0\omega\delta T_1 + \mathbf{V}_0\omega\delta T_2 - C_{T_{nom}}\delta\Delta\mathbf{X}_f \\ \delta\mathbf{V}_1 &= \delta\mathbf{V}_0 + \mathbf{U}_0\omega\delta T_1 - \mathbf{U}_0\omega\delta T_2 - S_{T_{nom}}\delta\Delta\mathbf{X}_f \end{cases} \qquad \text{Equations 10}$$

Au cours de l'étape 420, le contrôleur utilisé effectue un asservissement local de type régulateur quadratique linéaire (LQR). Le modèle est modifié à chaque pas en fonction de l'état et de la commande précédente.

L'initialisation du contrôleur 420 comprend une étape préliminaire 415 de calcul d'une commande nominale $T_{1nom}$ par un asservissement complémentaire en fonction d'une longueur de pas moyen souhaitée $\text{Step}_{av}$. Plus précisément, la durée de pas est calculée en fonction de la vitesse courante $V_o$ de la manière suivante

$$T_{1nom} = \frac{\text{asinh}\left(\frac{\text{Step}_{av}}{2\|\mathbf{V}_0\|}\right)}{\omega} \qquad \text{Equation 11}$$

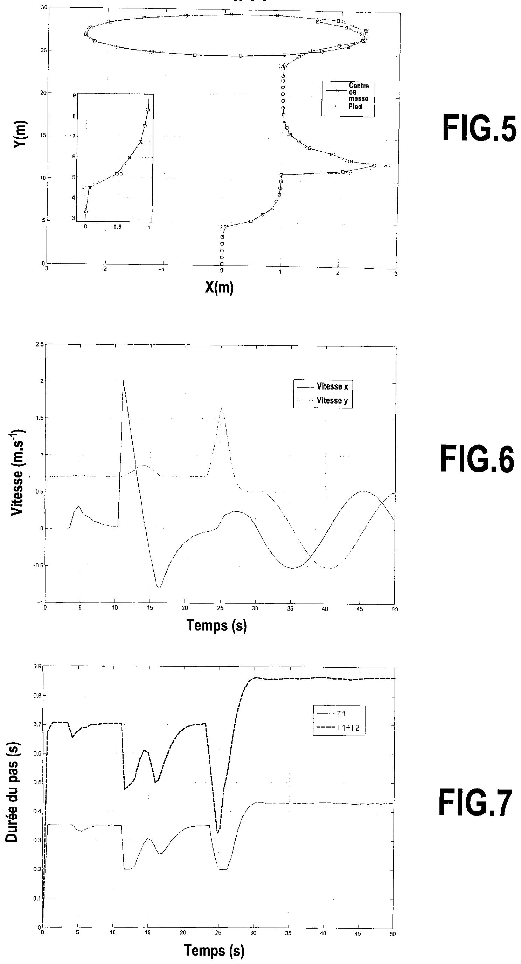

En référence aux figures 5 à 7, on a représenté les résultats de déplacement d'un robot 100 utilisant le procédé de contrôle de la figure 4.

La pulsation est égale à $3\text{ s}^{-1}$. La durée de pas $T_1 + T_2$ est contrainte entre 0,2 et 0,8 s et la longueur de pas $\Delta X_f$ est contrainte entre 10 cm et 1,2 m. Les variables de commande $\Delta X_f$ et $T_1$ constituent les variables de commande

$\mathcal{U}$ . La masse du robot est de 70 kg.

La consigne suivante est définie : partant d'un point de coordonnées (0 ; 0) une vitesse constante de 0,7 m.s$^{-1}$ suivant la direction y est demandée au robot 100 pendant 3 s. Puis une droite perpendiculaire à la direction de la vitesse précédente doit être atteinte et parcourue à une vitesse de 0,7 m.s$^{-1}$ pendant 20 s. Une perturbation latérale équivalente à 700 N pendant 0,2 s est appliquée quand le robot 100 atteint le milieu de la droite précédente. Enfin, il est demandé au robot de parcourir un cercle de rayon de 2 m à la vitesse de 0,5 m.s$^{-1}$ pendant 27 s.

La figure 5 présente des positions successives du centre de masse 110 et du pied 130. On constate que la perturbation latérale entraîne un débord d'environ 3,5 m. En figure 6, sont représentées les vitesses horizontales suivant les deux axes. En figure 7 est représentée la durée du pas du robot au cours de son déplacement, sous la forme des représentations graphiques de T$_1$ et de T$_1$ + T$_2$.

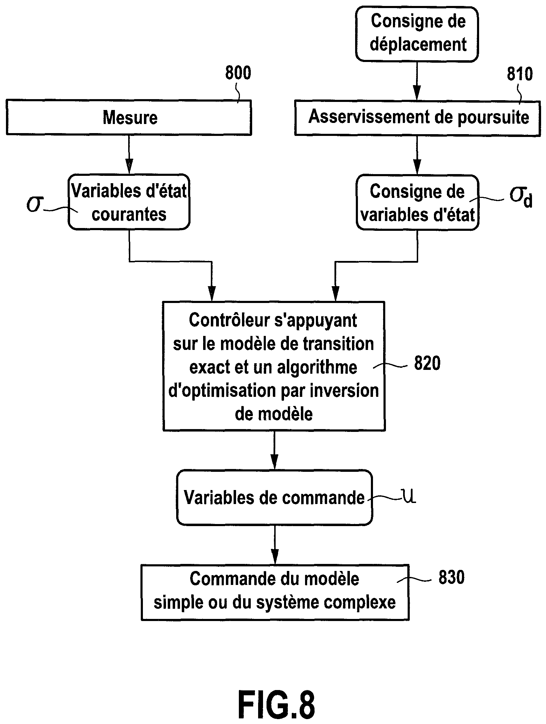

En référence à la figure 8, on a représenté un autre mode de réalisation de l'invention.

Une étape 800 de mesure de valeurs courantes de variables d'état σ est tout d'abord effectuée.

Une consigne de variables d'état identique à celle définie à l'étape 400 relative au mode de réalisation de la figure 4 est définie parallèlement au cours d'une étape de projection 810. L'étape 810 est similaire à l'étape de projection 410 du mode de réalisation relatif à la figure 4.

Cette étape de projection permet le calcul d'une vitesse de consigne V, et d'un vecteur de position de consigne U. Ces deux variables d'état constituant une consigne de variables d'état σ$_d$ sont utilisées comme consigne pour une étape d'asservissement par un contrôleur 820. Le contrôleur utilisé s'appuie sur le modèle de transition défini aux équations 4, sous sa forme exacte, et utilise un algorithme d'inversion de modèle.

Le critère d'optimisation pour l'inversion de modèle est pris égal à

$$\frac{1}{2} \left( \|\mathbf{U}_d - \mathbf{U}_1\|^2_{Q_U} + \|\mathbf{V}_d - \mathbf{V}_1\|^2_{Q_V} \right)$$

où U$_d$ et V$_d$ sont les variables d'état désirées, et Q$_U$ et Q$_V$ sont des matrices de pondération.

Dans cette optimisation, le système d'équations 5 est utilisé comme contraintes d'égalités, et la durée du pas, le positionnement du pied et les caractéristiques du sol peuvent être utilisées comme contraintes d'inégalités. Les variables extraites sont les grandeurs T$_1$, T$_2$ et ΔX$_f$. L'optimisation est effectuée sur un pas du robot 100.

La contrainte relative au maximum d'énergie potentielle à l'instant t$_2$ s'écrit sous la forme

$$\begin{aligned} &\left[ \|C_{T_1}\mathbf{U}_0 + S_{T_1}\mathbf{V}_0 - \Delta\mathbf{X}_f\|^2 + \|S_{T_1}\mathbf{U}_0 + C_{T_1}\mathbf{V}_0\|^2 \right] S_{2T_2} \\ &+ 2 \left[ C_{T_1}\mathbf{U}_0 + S_{T_1}\mathbf{V}_0 - \Delta\mathbf{X}_f \right]^t \left[ S_{T_1}\mathbf{U}_0 + C_{T_1}\mathbf{V}_0 \right] C_{2T_2} = 0 \end{aligned} \qquad \text{Equation 12}$$

ce qui amène à

$$T_2 = \frac{1}{2\omega} ln \frac{\|(\mathbf{U}_0 - \mathbf{V}_0)(C_{T_1} - S_{T_1}) - \Delta\mathbf{X}_f\|}{\|(\mathbf{U}_0 + \mathbf{V}_0)(C_{T_1} + S_{T_1}) - \Delta\mathbf{X}_f\|} \qquad \text{Equation 13}$$

Les variables de commande T$_1$ et ΔX$_f$ (notées $\mathcal{U}$ ) sont alors utilisées au cours d'une étape 830 pour la commande d'un modèle complexe du robot 100 ou du robot 100 lui-même.

Une fois la commande appliquée, le processus est recommencé aux étapes 800 et 810.

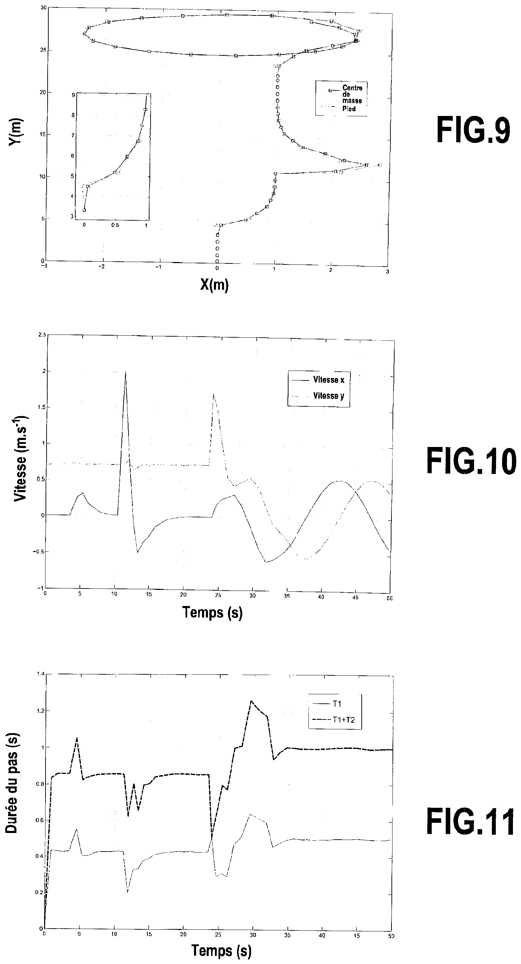

En référence aux figures 9 à 11, on a représenté les résultats du déplacement du robot 100 contrôlé par le procédé représenté en figure 8.

La figure 9 représente la trajectoire du robot 100, la figure 10 représente ses vitesses horizontales suivant les deux axes et enfin la figure 11 représente la durée des pas au cours du trajet du robot.

La consigne est la même que celle donnée dans le scénario des figures 5 à 7. On constate en figure 9 que le procédé utilisant un modèle non linéaire de commande permet une réponse plus rapide à la perturbation, puisque le débord latéral est inférieur à 2 m, contrairement à ce que l'on observe en figure 5.

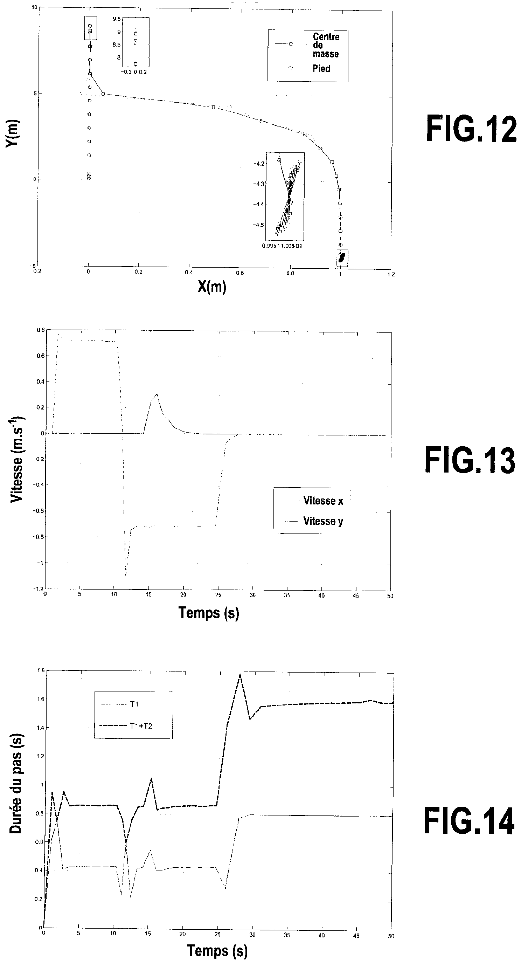

En référence aux figures 12 à 14, on a représenté les résultats relatifs à un déplacement du robot 100 commandé par un procédé selon la figure 8, mais avec cette fois-ci une consigne différente.

La consigne utilisée cette fois ci est la suivante : sortant d'une vitesse nulle, le robot doit atteindre une vitesse de 0,7 m.s$^{-1}$ en restant sur la droite x = 0 jusqu'au temps t = 10 s. Puis le robot doit faire marche arrière sur la même droite jusqu'à t = 14 s. Enfin, il doit suivre la droite x = 1 m à la même vitesse jusqu'à t = 24 s, instant auquel on lui demande de s'arrêter.

En figure 12, on a représenté la trajectoire du robot. Les inserts constituent des agrandissements des zones où le robot fait demi-tour ou s'arrête. La figure 13 représente l'évolution de la vitesse suivant les deux axes au cours du temps. Enfin, la figure 14 représente l'évolution de la longueur de pas en fonction du temps.

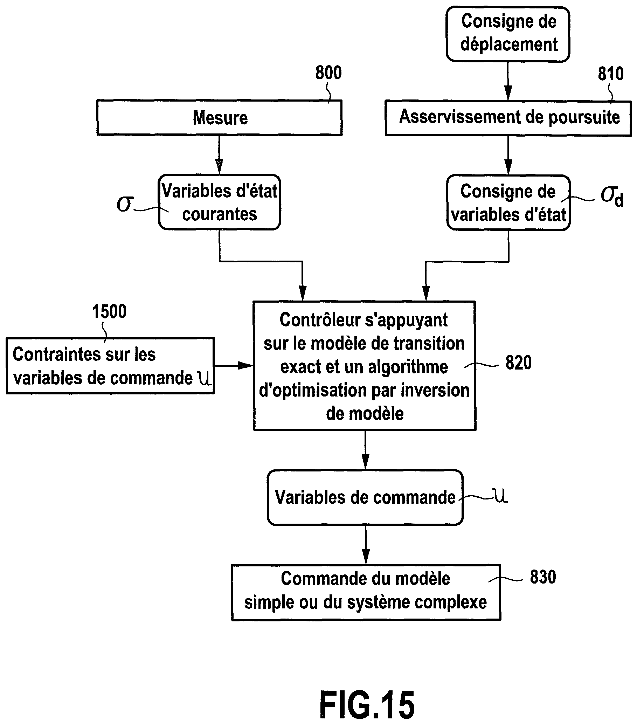

En figure 15, on a représenté un procédé de contrôle selon l'invention qui diffère de celui représenté en figure 8 par l'introduction de contraintes 1500 portant sur les variables de commande $\mathcal{V}$ liées à l'environnement dans lequel se déplace le robot.

Il s'agit ici de contraintes de longueur de pas liées à la présence d'un escalier.

Dans un scénario, le robot se déplace dans un escalier en suivant une ligne droite à la vitesse de 0,4 m.s$^{-1}$ tandis qu'il est poussé en avant par application d'une perturbation équivalente à 175 N pendant 0,2 s, puis latéralement par application d'une perturbation équivalente à 500 N pendant 0,2 s.

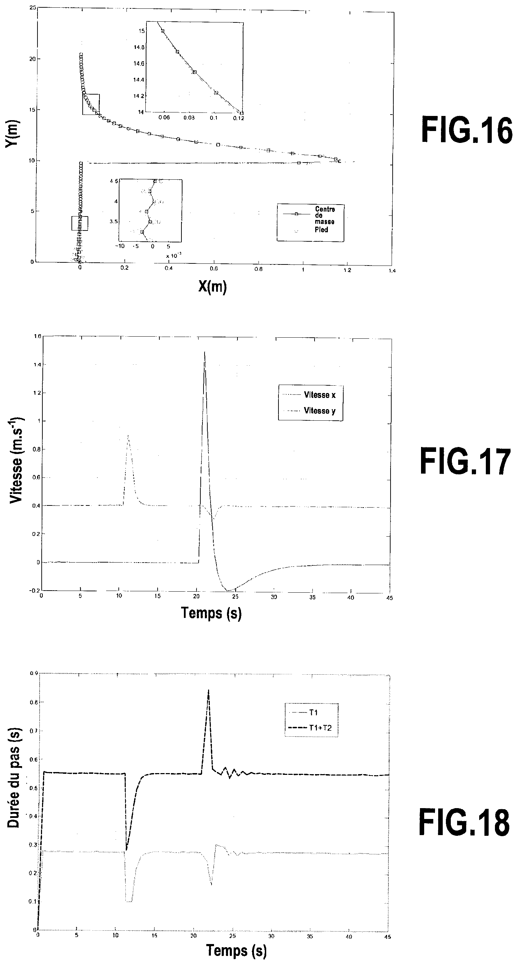

Les figures 16 à 18 représentent des résultats obtenus avec le procédé de contrôle suivant la figure 15. La longueur de pas est contrainte à la valeur 0,25 m suivant la direction y et le temps $T_1$ est contraint entre 0,1 s et 0,8 s. Ainsi, par rapport aux simulations précédentes, la durée de pas peut être plus courte.

La figure 16 représente le déplacement du robot 100 dans le plan. Des inserts ont été introduits pour montrer que la contrainte de longueur de pas constant suivant la direction y est respectée.

La figure 17 représente l'évolution de la vitesse suivant les deux axes en fonction du temps. La figure 18 représente enfin la durée du pas du robot en fonction du temps.

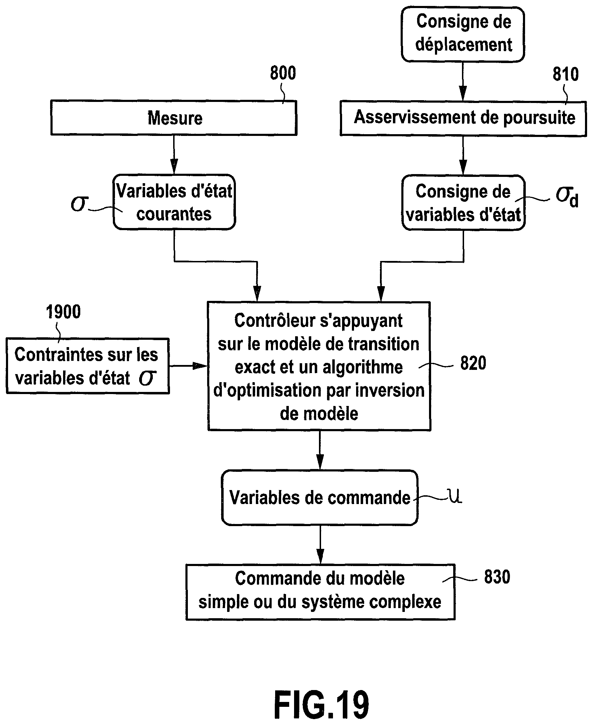

La figure 19 représente un procédé de contrôle d'un robot selon l'invention prenant en compte des contraintes 1900 portant sur les variables d'état σ. Ces contraintes sont ici liées aux caractéristiques de frottement du sol. Elles sont introduites au niveau du contrôleur 820.

Ces contraintes liées aux caractéristiques de frottement du sol sont introduites sous l'hypothèse que l'instant où ces contraintes doivent être respectées est l'instant du changement de pied en contact avec le sol.

Deux séries de conditions sont alors introduites dans le modèle. Elles s'expriment sous les formes suivantes.

$$\begin{cases} \mathbf{U}_1^- &= C_{T_1}\mathbf{U}_0 + S_{T_1}\mathbf{V}_0 \\ \mathbf{V}_1^- &= S_{T_1}\mathbf{U}_0 + C_{T_1}\mathbf{V}_0 \end{cases} \qquad \text{Equations 14}$$

$$\begin{cases} \mathbf{U}_1^+ &= C_{T_1}\mathbf{U}_0 + S_{T_1}\mathbf{V}_0 - \Delta\mathbf{X}_f \\ \mathbf{V}_1^+ &= S_{T_1}\mathbf{U}_0 + C_{T_1}\mathbf{V}_0 \end{cases} \qquad \text{Equations 15}$$

dans lesquelles les exposants - et + symbolisent respectivement les instants avant et après le changement de pied en contact avec le sol. Il s'ensuit que pour que les forces de contact soient comprises dans le cône de frottement défini par le coefficient de frottement μ, alors les contraintes suivantes doivent être satisfaites.

$$\begin{cases} \omega^2\left\|\mathbf{U}_1^-\right\| &\leq \mu g \\ \omega^2\left\|\mathbf{U}_1^+\right\| &\leq \mu g \end{cases} \qquad \text{Equations 16}$$

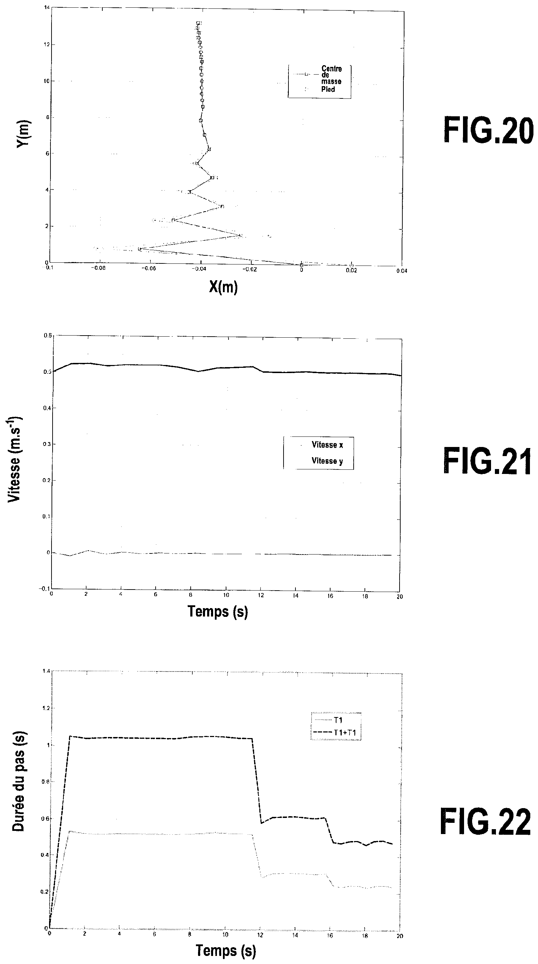

Les figures 20 à 22 représentent les résultats obtenus avec le procédé de la figure 19.

Le scénario de consigne donné au robot est le suivant : il doit se déplacer suivant la direction y de 0,5 m.s$^{-1}$. Les contraintes d'environnement sont telles que le coefficient de frottement initialement à la valeur de 1, est modifié toutes les 5 s. passant successivement aux valeurs 0,4, 0,3 et 0,2.

La figure 20 représente le déplacement du robot dans le plan.

La figure 21 représente la variation des vitesses suivant les deux axes en fonction du temps. Enfin, la figure 22 représente la variation du temps de pas en fonction du temps. Le pas s'accélère quand le coefficient de frottement atteint la valeur 0,3.

On précise que la commande de la figure 8 est quatre fois plus rapide que la commande de la figure 11. Celle-ci nécessite un temps de calcul de 25 ms par pas de déplacement sur un ordinateur biprocesseur, la commande ayant été programmée en langage Matlab (TM). De tels résultats permettent d'envisager l'utilisation de cette commande dans un contexte interactif, ou dans un contexte temps réel.

Selon une variante, on utilise une commande basée sur l'utilisation simultanée des commandes des figures 4 et 8.

Dans certains modes de réalisation, au lieu de mesurer les valeurs des variables d'état à l'étape 300, on les estime sur la base de différentes informations disponibles.

Dans certains modes de réalisation, au lieu d'optimiser les variables de commande $\Delta X_f$ et $T_1$, on optimise des variables de commande d'un modèle complexe, en utilisant les principes présentés dans les modes de réalisation portant sur le modèle de pendule linéaire inversé.

Une commande basée sur la modélisation proposée doit être constituée d'au moins deux variables de commande libres afin de garantir la stabilité du système simple.

Par exemple, le temps $T_1$ peut être imposé si la position du pied est libre à la fois en x et en y. Dans un escalier, s'il faut fixer le pas suivant la direction de l'escalier (le pas des marches), le temps $T_1$ et la position du pied dans la direction latérale doivent être libres.

Si d'autres contraintes doivent être imposées, il devient alors nécessaire de considérer plus d'un pas. Par exemple, si la position des pieds est imposée, la variable de commande $T_1$ suffit à condition de considérer au moins deux pas successifs dans le calcul d'optimisation.

L'invention ne se limite pas au mode de réalisation présenté mais s'étend à toutes les variantes de réalisation dans le cadre de la portée des revendications. Notamment, au lieu d'être modélisé sous forme d'un pendule linéaire inversé, le robot peut être modélisé sous la forme d'un système de type compas, c'est-à-dire avec un centre de masse relié à au moins deux pieds par des jambes de longueur constantes.

Egalement, le robot peut disposer de plus de deux jambes, par exemple quatre jambes. Dans un mode de réalisation, il évolue avec, en permanence, une unique jambe posée et trois jambes levées. Dans un autre mode de réalisation, il évolue avec plusieurs jambes posées et une ou plusieurs jambes levées. Dans ce dernier cas, entre deux changements de jambe, le centre de pression au sol est immobile. Les changements de jambe sont donc des changements de centre de pression au sol. La notion de changement de jambe recouvre alors, outre la pose d'une jambe et la levée simultanée d'une autre jambe, la pose d'une jambe sans levée simultanée d'une autre jambe, et également la levée d'une jambe sans pose simultanée d'une autre jambe, à condition qu'une jambe reste au contact du sol en permanence.

## Revendications

1. Procédé de contrôle du mouvement sur un sol d'un dispositif (100) disposant d'au moins deux jambes (120), comprenant

   - une étape d'obtention (300 ; 400 ; 800) de valeurs courantes ($\sigma$) de variables d'état cinématiques du dispositif,
   - une étape d'optimisation (320 ; 420 ; 820), sous des contraintes (1500 ; 1900), d'une commande de déplacement ($\mathcal{U}$) pour le dispositif, en prenant en compte lesdites valeurs courantes ($\sigma$) et une consigne ($\sigma_d$) de déplacement du dispositif, ladite optimisation (320 ; 420 ; 820) étant effectuée en modélisant (Fig. 1, 2) un déplacement du dispositif (100) entre un état courant ($t_1$) et un deuxième état ($t_2$), le dispositif s'appuyant, au cours dudit déplacement au moins sur une première jambe, puis à partir d'un instant de changement de centre de pression au sol ($t_p$) au moins sur une deuxième jambe,
   - et une étape d'application (330 ; 430 ; 830) de ladite commande de déplacement ($\mathcal{U}$),

   **caractérisé en ce que** ladite optimisation est effectuée sous l'hypothèse que l'énergie potentielle de gravité du dispositif dans le deuxième état ($t_2$) est, en fonction du temps, un maximum local.

2. Procédé de contrôle selon la revendication 1, dans lequel le dispositif est modélisé sous forme d'un pendule linéaire inversé.

3. Procédé de contrôle selon la revendication 1 ou la revendication 2, dans lequel la commande de déplacement ($\mathcal{U}$) comprend une position ($\Delta X_f$) sur le sol pour un contact d'une jambe avec le sol.

4. Procédé de contrôle selon l'une des revendications 1 à 3, dans lequel la commande de déplacement ($\mathcal{U}$) comprend un temps ($T_1$) pour un contact d'une jambe avec le sol.

**5.** Procédé de contrôle selon l'une des revendications 1 à 4, dans lequel ladite optimisation (420) est effectuée en utilisant un modèle de déplacement linéarisé sous l'hypothèse que le déplacement est rectiligne.

**6.** Procédé de contrôle selon la revendication 5, dans lequel l'optimisation (420) est effectuée à l'aide d'un régulateur quadratique linéaire.

**7.** Procédé de contrôle selon l'une des revendications 1 à 4, dans lequel l'optimisation est effectuée par inversion de modèle.

**8.** Procédé de contrôle selon l'une des revendications 1 à 7, dans lequel l'optimisation est effectuée en fonction d'une consigne ($\sigma_d$) déterminée en fonction d'une trajectoire poursuivie.

**9.** Procédé de contrôle selon l'une des revendications 1 à 8, dans lequel l'optimisation est effectuée en fonction d'une consigne ($\sigma_d$) déterminée en fonction d'une vitesse poursuivie.

**10.** Procédé de contrôle selon l'une des revendications 1 à 9, dans lequel l'optimisation est effectuée sous une contrainte de respect d'un cône de frottement lors d'un contact ($t_p$) d'une jambe (120) avec le sol.

**11.** Procédé de contrôle selon l'une des revendications 1 à 10 dans lequel l'optimisation est effectuée en fonction d'une consigne ($\sigma_d$) comprenant au moins une position du dispositif (U) ou une vitesse du dispositif (V).

**12.** Procédé de contrôle selon l'une des revendications 1 à 11, dans lequel l'optimisation (415) est effectuée en fonction d'une consigne de longueur de pas moyen.

**13.** Procédé de contrôle selon l'une des revendications 1 à 12, dans lequel l'énergie potentielle est fonction d'une distance entre le centre de masse et un point de contact avec le sol de la jambe en contact avec le sol.

**14.** Robot disposant d'au moins deux jambes et incorporant un dispositif de commande mettant en oeuvre un procédé de contrôle selon l'une des revendications 1 à 13.

**Patentansprüche**

**1.** Verfahren zur Kontrolle der Bewegung einer Vorrichtung (100), die über mindestens zwei Beine (120) verfügt, auf einem Boden, umfassend:

- einen Schritt der Ermittlung (300; 400; 800) von laufenden Werten ($\sigma$) von kinematischen Zustandsvariablen der Vorrichtung,
- einen Schritt der Optimierung (320; 420; 820) einer Bewegungssteuerung ($\vartheta$) für die Vorrichtung unter Anforderungen (1500; 1900), wobei die laufenden Werte ($\sigma$) und ein Bewegungssollwert ($\sigma_d$) der Vorrichtung berücksichtigt werden, wobei die Optimierung (320; 420; 820) durchgeführt wird, wobei eine Bewegung der Vorrichtung (100) zwischen einem laufenden Zustand ($t_1$) und einem zweiten Zustand ($t_2$) modelliert wird (Fig. 1, 2), wobei sich die Vorrichtung während der Bewegung zumindest auf ein erstes Bein, dann ab einem Zeitpunkt der Änderung des Druckmittelpunktes am Boden ($t_p$) zumindest auf ein zweites Bein stützt,
- und einen Schritt der Anwendung (330; 430; 830) des Bewegungsbefehls ($\vartheta$),

**dadurch gekennzeichnet, dass** die Optimierung unter der Annahme erfolgt, dass die potentielle Gravitationsenergie der Vorrichtung im zweiten Zustand ($t_2$) in Abhängigkeit von der Zeit ein lokales Maximum ist.

**2.** Kontrollverfahren gemäß Anspruch 1, bei dem die Vorrichtung in Form eines umgekehrten linearen Pendels modelliert wird.

**3.** Kontrollverfahren gemäß Anspruch 1 oder Anspruch 2, bei dem die Bewegungssteuerung ($\vartheta$) eine Position ($\Delta X_f$) auf dem Boden für einen Kontakt eines Beins mit dem Boden umfasst.

**4.** Kontrollverfahren gemäß einem der Ansprüche 1 bis 3, bei dem die Bewegungssteuerung ($\vartheta$) eine Zeit ($T_1$) für einen Kontakt eines Beins mit dem Boden umfasst.

**5.** Kontrollverfahren gemäß einem der Ansprüche 1 bis 4, bei dem die Optimierung (420) erfolgt, wobei ein linearisiertes Bewegungsmodell unter der Annahme, dass die Bewegung geradlinig ist, verwendet wird.

**6.** Kontrollverfahren gemäß Anspruch 5, bei dem die Optimierung (420) mit Hilfe eines linearen Quadratregulators erfolgt.

**7.** Kontrollverfahren gemäß einem der Ansprüche 1 bis 4, bei dem die Optimierung durch Modellinversion erfolgt.

**8.** Kontrollverfahren gemäß einem der Ansprüche 1 bis 7, bei dem die Optimierung in Abhängigkeit von einem Sollwert ($\sigma_d$) erfolgt, der in Abhängigkeit von einer realisierten Strecke bestimmt wird.

**9.** Kontrollverfahren gemäß einem der Ansprüche 1 bis 8, bei dem die Optimierung in Abhängigkeit von einem Sollwert ($\sigma_d$) erfolgt, der in Abhängigkeit von einer realisierten Geschwindigkeit bestimmt wird.

**10.** Kontrollverfahren gemäß einem der Ansprüche 1 bis 9, bei dem die Optimierung unter einer Anforderung einer Einhaltung eines Reibungskegels bei einem Kontakt ($t_p$) eines Beins (120) mit dem Boden erfolgt.

**11.** Kontrollverfahren gemäß einem der Ansprüche 1 bis 10, bei dem die Optimierung in Abhängigkeit von einem Sollwert ($\sigma_d$), umfassend mindestens eine Position der Vorrichtung (U) oder eine Geschwindigkeit der Vorrichtung (V), erfolgt.

**12.** Kontrollverfahren gemäß einem der Ansprüche 1 bis 11, bei dem die Optimierung (415) in Abhängigkeit von einem Sollwert einer mittleren Schrittlänge erfolgt.

**13.** Kontrollverfahren gemäß einem der Ansprüche 1 bis 12, bei dem die potentielle Energie von einem Abstand zwischen dem Massenzentrum und einem Kontaktpunkt mit dem Boden des mit dem Boden in Kontakt befindlichen Beins abhängt.

**14.** Roboter, der über mindestens zwei Beine verfügt und eine Steuervorrichtung einschließt, die ein Kontrollverfahren gemäß einem der Ansprüche 1 bis 13 einsetzt.

**Claims**

**1.** A method of controlling motion on the ground of a device (100) having at least two legs (120), the method comprising:

   • an obtaining step (300; 400; 800) of obtaining current values ($\sigma$) of kinematic state variables of the device;
   • an optimization step (320; 420; 820) of optimizing a movement command ($\mathcal{U}$) for the device under constraints (1500; 1900) while taking account of said current values ($\sigma$) and of a movement setpoint ($\sigma_d$) for the device, said optimization (320; 420; 820) being performed by modeling (Figures 1, 2) a movement of the device (100) between a current state ($t_1$) and a second state ($t_2$), the device being supported during said movement by at least on a first leg, and then from an instant ($t_p$) in which the center of pressure on the ground is changed, at least on a second leg; and
   • an application step (330; 430; 830) of applying said movement command ($\mathcal{U}$);

   the method being **characterized in that** said optimization is performed on the assumption that the gravity potential energy of the device in the second state ($t_2$) is a local maximum as a function of time.

**2.** A control method according to claim 1, wherein the device is modeled in the form of an inverted linear pendulum.

**3.** A control method according to claim 1 or claim 2, wherein the movement command ($\mathcal{U}$) comprises a position on the ground ($\Delta X_f$) for contact between a leg and the ground.

**4.** A control method according to any one of claims 1 to 3, wherein the movement command ($\mathcal{U}$) comprises a time ($T_1$) for contact between a leg and the ground.

**5.** A control method according to any one of claims 1 to 4, wherein said optimization (420) is performed by using a movement model that is linearized on the assumption that the movement is rectilinear.

6.  A control method according to claim 5, wherein the optimization (420) is performed with the help of a linear quadratic regulator.

7.  A control method according to any one of claims 1 to 4, wherein the optimization is performed by model inversion.

8.  A control method according to any one of claims 1 to 7, wherein the optimization is performed as a function of a setpoint ($\sigma_d$) determined as a function of a trajectory to be followed.

9.  A control method according to any one of claims 1 to 8, wherein the optimization is performed as a function of a setpoint ($\sigma_d$) that is determined as a function of a velocity to be followed.

10. A control method according to any one of claims 1 to 9, wherein the optimization is performed under a constraint of complying with a friction cone during contact ($t_p$) of a leg (120) with the ground.

11. A control method according to any one of claims 1 to 10, wherein the optimization is performed as a function of a setpoint ($\sigma_d$) including at least one position (U) of the device or at least one velocity (V) of the device.

12. A control method according to any one of claims 1 to 11, wherein the optimization (415) is performed as a function of an average step length setpoint.

13. A control method according to any one of claims 1 to 12, wherein the potential energy is a function of the distance between the center of mass and the point of contact with the ground of the leg that is in contact with the ground.

14. A robot including at least two legs and incorporating a control device performing a control method according to any one of claims 1 to 13.

FIG.1

FIG.2

FIG.3

Consigne de
déplacement

400

410

| Mesure | Asservissement de poursuite |

$\sigma$ — Variables d'état
courantes

Consigne de
variables d'état — $\sigma_d$

Asservissement de la
durée de pas $T_{1nom}$ — 415

Contrôleur s'appuyant sur le
modèle de transition linéarisé — 420

Variables de commande
$\triangle X_{f}, T_{1nom}$ — $u$

Commande du modèle
simple ou du système complexe — 430

# FIG.4

FIG.5

FIG.6

FIG.7

**FIG.8**

FIG.9

FIG.10

FIG.11

**FIG.12**

**FIG.13**

**FIG.14**

Consigne de déplacement

Mesure — 800

Asservissement de poursuite — 810

$\sigma$ — Variables d'état courantes

Consigne de variables d'état — $\sigma_d$

1500 — Contraintes sur les variables de commande $\mathcal{u}$

Contrôleur s'appuyant sur le modèle de transition exact et un algorithme d'optimisation par inversion de modèle — 820

Variables de commande — $\mathcal{u}$

Commande du modèle simple ou du système complexe — 830

## FIG.15

FIG.16

FIG.17

FIG.18

Consigne de
déplacement

800

Mesure

810

Asservissement de poursuite

$\sigma$ — Variables d'état
courantes

Consigne de
variables d'état — $\sigma_d$

1900

Contraintes sur les
variables d'état $\sigma$

Contrôleur s'appuyant
sur le modèle de transition
exact et un algorithme
d'optimisation par inversion
de modèle

820

Variables de commande — $u$

Commande du modèle
simple ou du système complexe

830

FIG.19

**FIG.20**

**FIG.21**

**FIG.22**

## RÉFÉRENCES CITÉES DANS LA DESCRIPTION

**Documents brevets cités dans la description**

- US 20080133053 A

**Littérature non-brevet citée dans la description**

- **HERDT et al.** Online walking motion generation with automatic foot step placement. *Advanced robotics,* 2010, vol. 24, 719
- **HYON ; FUJIMOTO.** *IFAC Symposium on robot control,* 2009
- **VAN OORT.** *Stramigioli IEEE international conference on Robotics and Automotion,* 2007, 4653-4660
- **MORDATCH et al.** Robust physics-based locomotion using low-dimensionnal planning. *ACM Transactions on graphics,* 2010, vol. 29, 3